# EUROPEAN PATENT APPLICATION

(11) **EP 4 535 834 A1**
(43) Date of publication of application: **09.04.2025**
(21) Application number: 22944358.5
(22) Date of filing: 02.06.2022
(51) Int. Cl.: H04W 4/06

(54) **SERVICE PROCESSING METHOD AND APPARATUS, INDICATION SENDING METHOD AND APPARATUS, DEVICE, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN); WU, Yumin, Beijing 100085 (CN)
(74) Representative: Dehns Germany Partnerschaft mbB
(86) International application number: PCT/CN2022/097002
(87) International publication number: WO 2023/231030

(57) **Abstract**

The present application relates to the field of mobile communications, and discloses a service processing method and apparatus, an indication sending method and apparatus, a device, and a storage medium. The method comprises: a terminal releases or suspends, in response to determining that a serving cell does not support an inactive multicast service, a configuration and/or a radio bearer of the inactive multicast service. If a terminal determines that a serving cell does not support an inactive multicast service, it indicates that the network device cannot transmit the inactive multicast service, and the terminal releases or suspends the configuration and/or radio bearer of the inactive multicast service. The present application provides a solution for a terminal to process an inactive multicast service, ensuring the reliability of transmission.

## Description

### TECHNICAL FIELD

The present disclosure relates to the field of mobile communication, in particular to a service processing method, an indication sending method, an apparatus, a device and a storage medium.

### BACKGROUND

In a mobile communication system, in a case that a terminal is switched from a connected state to an inactive state, it is necessary to ensure that the terminal is still capable of receiving an inactive multicast service. In addition, a network device needs to send a configuration of the inactive multicast service to the terminal, so that the terminal receives the inactive multicast service. However, in a case that the terminal moves out of a serving cell covered by the network device, there is an urgent need to provide a method for processing the inactive multicast service.

### SUMMARY

An object of the present disclosure is to provide a service processing method, an indication sending method, an apparatus, a device and a storage medium. The present disclosure provides a scheme of processing, by a terminal, an inactive-multicast service, so as to ensure transmission reliability. The present disclosure provides the following technical solutions.

In one aspect, the present disclosure provides in some embodiments a service processing method, executed by a terminal, including: releasing or suspending a configuration and/or a radio bearer of an inactive multicast service in response to determining that a serving cell does not support the inactive multicast service.

In another aspect, the present disclosure provides in some embodiments an indication sending method, executed by a network device, including: sending a configuration indication to a terminal, wherein the configuration indication is used to indicate the terminal to release or suspend a configuration and/or a radio bearer of an inactive multicast service.

In yet another aspect, the present disclosure provides in some embodiments a service processing apparatus, including: a processing module configured to release or suspend a configuration and/or a radio bearer of an inactive multicast service in response to determining that a serving cell does not support the inactive multicast service.

In still yet another aspect, the present disclosure provides in some embodiments an indication sending apparatus, including: a sending module configured to send a configuration indication to a terminal, wherein the configuration indication is used to indicate the terminal to release or suspend a configuration and/or a radio bearer of an inactive multicast service.

In still yet another aspect, the present disclosure provides in some embodiments a terminal, including: a processor; a transceiver coupled to the processor; and a memory storing therein an executable instruction for the processor. The processor is configured to load and execute the executable instruction so as to implement the above-mentioned service processing method.

In still yet another aspect, the present disclosure provides in some embodiments a network device, including: a processor; a transceiver coupled to the processor; and a memory storing therein an executable instruction for the processor. The processor is configured to load and execute the executable instruction so as to implement the above-mentioned indication sending method.

In still yet another aspect, the present disclosure provides in some embodiments a computer-readable storage medium storing therein an executable program code. The executable program code is loaded and executed by a processor so as to implement the above-mentioned service processing method or indication sending method.

In still yet another aspect, the present disclosure provides in some embodiments a chip, including a programmable logic circuit and/or a program instruction. The chip operates on a terminal or a network device so as to implement the above-mentioned service processing method or indication sending method.

In still yet another aspect, the present disclosure provides in some embodiments a computer program product. The computer program product is executed by a processor of a terminal or a network device so as to implement the above-mentioned service processing method or indication sending method.

In a service processing scheme provided in the embodiments of the present disclosure, in a case that the terminal determines that the serving cell does not support the inactive-multicast service, it means that the network device cannot transmit the inactive-multicast service, and the terminal releases or suspends the configuration and/or the radio bearer of the inactive-multicast service. The present disclosure provides a scheme for processing, by the terminal, the inactive-multicast service, so as to ensure the transmission reliability.

### BRIEF DESCRIPTION OF THE DRAWINGS

In order to illustrate the technical solutions of the present disclosure in a clearer manner, the drawings desired for the embodiments of the present disclosure will be described hereinafter briefly. Obviously, the following drawings merely relate to some embodiments of the present disclosure, and based on these drawings, a person skilled in the art may obtain the other drawings without any creative effort.
FIG. 1 is a block diagram of a communication system according to an embodiment of the present disclosure;
FIG. 2 is a flow chart of a service processing method according to an embodiment of the present disclosure;
FIG. 3 is another flow chart of the service processing method according to an embodiment of the present disclosure;
FIG. 4 is yet another flow chart of the service processing method according to an embodiment of the present disclosure;
FIG. 5 is a block diagram of a service processing apparatus according to an embodiment of the present disclosure;
FIG. 6 is another block diagram of the service processing apparatus according to an embodiment of the present disclosure;
FIG. 7 is a block diagram of an indication sending apparatus according to an embodiment of the present disclosure; and
FIG. 8 is a schematic view of a communication device according to an embodiment of the present disclosure.

### DETAILED DESCRIPTION

In order to make the objects, the technical solutions and the advantages of the present disclosure more apparent, the present disclosure will be described hereinafter in a clear and complete manner in conjunction with the drawings and embodiments.

The present disclosure will be described hereinafter in details in conjunction with illustrative embodiments, and examples thereof are shown in the drawings. Unless otherwise specified, identical numerals in different drawings represent identical or similar elements. The implementations in the following description do not include all implementations consistent with the embodiments of the present disclosure, and in contrast, they are merely examples of devices and methods consistent with some aspects of the embodiments of the present disclosure as specified in the appended claims.

The terms used in embodiments of the present disclosure are for illustrative purposes only, but do not intend to limit the present disclosure. Such a singular form as "one" or "the" used in the embodiments of the present disclosure and the appended claims also intends to include a plural form, unless otherwise defined. It should be appreciated that, the expression "and/or" used in the context is meant to include any combination, or all possible combinations, of one or more associated items.

It should be appreciated that, although such expressions as "first", "second" and "third" are used to describe various information, the information are not limited by these expressions. These expressions are merely used to differentiate the information of a same type from each other. For example, without departing from the scope of the present disclosure, first information may also be called as second information, and similarly second information may also be called as first information. Depending on the context, such a word as "if" may be construed as "in a case that ... ", "in the case that ..." or "in response to determining that ...".

It should be appreciated that, information (including, but not limited to, user device information and user's personal information), data (including, but not limited to, data for analysis, stored data and presented data) and signals involved in the present disclosure are all authorized by a user or authorized fully by the parties, and the collection, use and processing of relevant data need to comply with relevant laws, regulations and standards of relevant countries and regions.

An application scenario of the present disclosure will be described hereinafter.

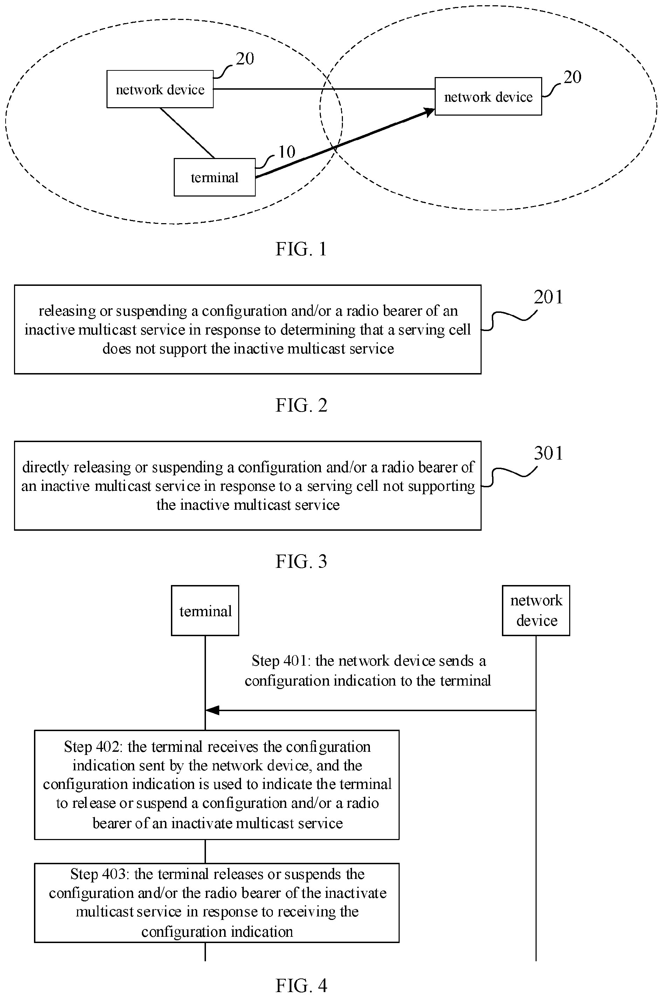

FIG. 1 is a block diagram of a communication system according to an exemplary embodiment of the present disclosure. The communication system includes a terminal 10 and a network device 20.

Usually there is a plurality of terminals 10, and one or more terminals 10 may be distributed in a cell managed by each network device 20. The terminal 10 includes various devices having a wireless communication function, e.g., a handheld device, a vehicle-mounted device, a wearable device, a computing device or any other processing device coupled to a wireless modem, and a User Equipment (UE) or a Mobile Station (MS) in various forms. For ease of description, in the embodiments of the present disclosure, the above-mentioned devices are collectively called as terminal.

The network device 20 is an apparatus deployed in an access network to provide the wireless communication function for the terminal 10. For ease of description, in the embodiments of the present disclosure, the apparatuses for providing the wireless communication function for the terminal 10 are collectively called as network device. A connection is established between the network device 20 and the terminal 10 via an air interface, and the communication, including signaling and data interaction, is performed through the connection. There is a plurality of network devices 20, and two neighboring network devices 20 may also communicate with each other in a wired or wireless manner. The terminal 10 may perform switching among different network devices 20, i.e., establish connections with different network devices 20.

The network device 20 may include a macro base station, a micro base station, a relay station or an access point in various forms. In systems using different radio access technologies, a device having a network device function may have different names. For example, in a 5^{th}-Generation (5G) New Radio (NR) system, it is called as gNodeB or gNB. Along with the evolution of the communication technology, the name "network device" may change.

FIG. 2 is a flow chart of a service processing method according to an exemplary embodiment of the present disclosure. For example, the service processing method is applied to the terminal and the network device as shown in FIG. 1. The method includes at least a part of the following contents.

Step 201: the terminal releases or suspends a configuration and/or a radio bearer of an inactive multicast service in response to determining that a serving cell does not support the inactive multicast service.

The serving cell refers to a cell which the terminal currently accesses. In other words, a cell currently providing services for the terminal is the serving cell. The inactive multicast service refers to a multicast service sent by the network device to the terminal in a case that the terminal is in an inactive state. The configuration and/or the radio bearer of the inactive multicast service refers to resource information for transmitting the inactive multicast service.

In some embodiments of the present disclosure, the inactive multicast service is a Multimedia Broadcast and Multicast Service (MBMS) or a Multicast Broadcast Service (MBS).

Optionally, the MBS is represented by a MBS identity. For example, the MBS identity is a Temporary Mobile Group Identity (TMGI), a MBS Session ID or a MBS QoS flow ID.

In addition, the term "releasing" refers to that the terminal deletes the configuration and/or radio bearer of the inactive multicast service stored in the terminal itself. The term "suspending" refers to that the terminal does not use the configuration and/or radio bearer of the inactive multicast service stored in the terminal itself but the configuration and/or radio bearer of the inactive multicast service are still stored in the terminal.

In the embodiments of the present disclosure, the terminal releases the configuration and/or radio bearer of the inactive multicast service in response to determining that the serving cell does not support the inactive multicast service. Alternatively, the terminal suspends the configuration and/or radio bearer of the inactive multicast service in response to determining that the serving cell does not support the inactive multicast service.

In addition, in the embodiments of the present disclosure, the releasing or suspending, by the terminal, the configuration and/or radio bearer of the inactive multicast service includes the followings.
(1) The terminal releases or suspends the configuration of the inactive multicast service.
(2) The terminal releases or suspends the radio bearer of the inactive multicast service.
(3) The terminal releases or suspends the configuration and radio bearer of the inactive multicast service.

In the embodiments of the present disclosure, in a case that the terminal determines that the serving cell does not support the inactive multicast service, it means that the serving cell does not transmit the inactive multicast service in this case. For the terminal, it cannot receive the inactive multicast service in the serving cell, so the terminal releases or suspends the configuration and/or radio bearer of the inactive multicast service.

In some embodiments of the present disclosure, the radio bearer is a MBS Radio Bearer (MRB).

In some embodiments of the present disclosure, the inactive multicast service is an INACTIVE multicast service, which may be understood as a multicast service for the terminal to still receive service data in an inactive state.

It should be appreciated that, in the embodiments of the present disclosure, the terminal may further stop monitoring a Physical Downlink Control Channel (PDCCH) corresponding to the inactive multicast service. In other words, after the terminal determines that the serving cell does not support the inactive multicast service, the terminal stops monitoring the PDCCH corresponding to the inactive multicast service, so as to stop receiving the inactive multicast service.

In the scheme provided in the embodiments of the present disclosure, in a case that the terminal determines that the serving cell does not support the inactive multicast service, it means that the network device cannot transmit the inactive multicast service, and the terminal releases or suspends the configuration and/or radio bearer of the inactive multicast service. The present disclosure provides a scheme for processing, by the terminal, the inactive multicast service, so as to ensure the transmission reliability.

It should be appreciated that, in the embodiments of the present disclosure, the description is given in a case that the terminal releases or suspends the configuration and/or radio bearer of the inactive multicast service. However, in another embodiment of the present disclosure, after the terminal enters the inactive state, the network device configures the configuration and/or radio bearer of the inactive multicast service for the terminal, so that the terminal receives the inactive multicast service sent by the serving cell based on the configured configuration and/or radio bearer of the inactive multicast service.

In addition, in the above embodiments, the description is given in a case that the terminal releases or suspends the configuration and/or radio bearer of the inactive multicast service. In another embodiment of the present disclosure, in a case that the serving cell supports the inactive multicast service again, the terminal recovers the configuration and/or radio bearer of the inactive multicast service in response to determining that the serving cell supports the inactive multicast service.

In some embodiments of the present disclosure, after the terminal determines that the serving cell supports the inactive multicast service, the terminal recovers the configuration and/or radio bearer of the inactive multicast service on its own initiative.

In some embodiments of the present disclosure, in a case that the serving cell supports the inactive multicast service, it means that the inactive multicast service may be transmitted between the serving cell and the terminal. For the terminal, it has released or suspended the configuration and/or radio bearer of the inactive multicast service, so the network device may configure the terminal to recover the configuration and/or radio bearer of the inactive multicast service.

In the scheme provided in the embodiments of the present disclosure, in a case that the serving cell supports the inactive multicast service again, the terminal may recover the configuration and/or radio bearer of the inactive multicast service, and thereby the inactive multicast service may be transmitted between the terminal and the serving cell, so as to ensure the reliability of the service transmission.

In the embodiment as shown in FIG. 2, the description is given with respect to releasing or suspending, by the terminal, the configuration and/or radio bearer of the inactive multicast service. To be specific, the terminal may release or suspend the configuration and/or radio bearer of the inactive multicast service on its own initiative.

FIG. 3 is another flow chart of the service processing method according to an exemplary embodiment of the present disclosure. As shown in FIG. 3, the method includes the following step.

Step 301: the terminal directly releases or suspends the configuration and/or radio bearer of the inactive multicast service in response to the serving cell not supporting the inactive multicast service.

In the embodiments of the present disclosure, in a case that the terminal determines that the serving cell does not support the inactive multicast service, it means that the terminal does not receive the inactive multicast service sent by the serving cell, so the terminal directly releases or suspends the configuration and/or radio bearer of the inactive multicast service.

Optionally, in response to determining that the serving cell does not support the inactive multicast service and the terminal not receiving a configuration indication, the terminal releases or suspends the configuration and/or radio bearer of the inactive multicast service.

In the embodiments of the present disclosure, in a case that the terminal determines that the serving cell does not support the inactive multicast service and the terminal does not receive the configuration indication, at this time the terminal directly releases or suspends the configuration and/or radio bearer of the inactive multicast service.

In some embodiments of the present disclosure, the inactive multicast service includes a predetermined type of inactive multicast service.

The predetermined type of inactive multicast service refers to an inactive multicast service received by the terminal in the serving cell and meeting requirements.

Optionally, the predetermined type of inactive multicast service includes at least one of the followings.
(1) An inactive multicast service in which the terminal is interested

The inactive multicast service in which the terminal is interested refers to an inactive multicast service defined by the terminal itself. Alternatively, the inactive multicast service in which the terminal is interested may also be understood as an inactive multicast service which needs to be received by the terminal. For the inactive multicast service which does not need to be received by the terminal, the terminal does not need to receive it.

In some embodiments of the present disclosure, the terminal configures by itself the inactive multicast service of interest, i.e., the inactive multicast service in which the terminal is interested is configured by the terminal on its own initiative.

### (2) An inactive multicast service which is currently received by the terminal

The inactive multicast service currently received by the terminal refers to an inactive multicast service received by the terminal in the serving cell where the inactive multicast service is supported.

In some embodiments of the present disclosure, there exists such a circumstance where the terminal is switched to another serving cell, a serving cell before the switching is a first serving cell, and a serving cell after the switching is a second serving cell. Hence, the inactive multicast service currently received by the terminal is actually an inactive multicast service sent by the first serving cell, and the terminal determines that the second serving cell does not support the inactive multicast service.

### (3) An inactive multicast service, a configuration of which is configured for the terminal

The network device configures an inactive multicast service for the terminal, so the terminal may receive the inactive multicast service sent by the serving cell based on the inactive multicast service configured by the network device.

It should be appreciated that, in the embodiments of the present disclosure, the description is given in a case that the inactive multicast service includes any type of inactive multicast service. In another embodiment of the present disclosure, the terminal may determine whether or not the serving cell supports the inactive multicast service, and a determination mode of the terminal includes any of the followings.
(1) In a case that the terminal cannot receive the inactive multicast service, the terminal determines that the serving cell does not support the inactive multicast service.
   In the embodiments of the present disclosure, the terminal continuously receives the inactive multicast service sent by the serving cell. However, in a case that the terminal cannot receive the inactive multicast service sent by the serving cell, it means that at this time the serving cell does not send the inactive multicast service to the terminal. At this time, the terminal determines that the serving cell does not support the inactive multicast service.
(2) In a case that the serving cell is determined as not belonging to an action area of the inactive multicast service, the terminal determines that the serving cell does not support the inactive multicast service.
   The network device configures the action area of the inactive multicast service for the terminal, i.e., in a case that the terminal is located in the action area of the inactive multicast service, the terminal receives the inactive multicast service sent by the serving cell, and in a case that the terminal is not located in the action area of the inactive multicast service, it means that the terminal cannot receive the inactive multicast service sent by the serving cell. In addition, it may also be understood that, the terminal determines that a current serving cell does not belong to the action area of the inactive multicast service, so the serving cell does not support the inactive multicast service and cannot send the inactive multicast service to the terminal, and the terminal cannot receive the inactive multicast service sent by the serving cell.
(3) In a case that the inactive multicast service supported by the serving cell does not belong to an inactive multicast service configured by the network device, the terminal determines that the serving cell does not support the inactive multicast service.

In the embodiments of the present disclosure, in a case that the network device configures the inactive multicast service for the terminal and the terminal determines that the inactive multicast service supported by the serving cell is different from the inactive multicast service configured by the network device, it means that the terminal determines that the inactive multicast service supported by the serving cell does not belong to the inactive multicast service configured by the network device, and determines that the serving cell does not support the inactive multicast service.

For example, the inactive multicast services configured by the network device for the terminal include an inactive multicast service 1, an inactive multicast service 2 and an inactive multicast service 3, and the inactive multicast service determined by the terminal and supported by the serving cell is an inactive multicast service 4. The inactive multicast service supported by the serving cell does not belong to the inactive multicast services configured by the network device, so the terminal determines that the serving cell does not support the inactive multicast service.

In the scheme provided by the embodiments of the present disclosure, the terminal determines that the serving cell does not support the inactive multicast service, so that the terminal subsequently releases or suspends the configuration and/or radio bearer of the inactive multicast service. In this way, it is able to not only increase the accuracy of determining, by the terminal, that the serving cell does not support the inactive multicast service, but also reduce resources for the terminal and ensure the transmission reliability.

It should be appreciated that, in the embodiments of the present disclosure, the terminal further stops monitoring the PDCCH corresponding to the inactive multicast service. In other words, after the terminal determines that the serving cell does not support the inactive multicast service, the terminal stops monitoring the PDCCH corresponding to the inactive multicast service, so as to stop receiving the inactive multicast service.

In the scheme provided in the embodiments of the present disclosure, the terminal determines that the serving cell does not support the inactive multicast service, and stops monitoring the PDCCH corresponding to the inactive multicast service. In this way, it is able to not only increase the accuracy of determining, by the terminal, that the serving cell does not support the inactive multicast service, but also reduce resources for the terminal and ensure the transmission reliability.

In the embodiment as shown in FIG. 2, the description is given with respect to releasing or suspending, by the terminal, the configuration and/or radio bearer of the inactive multicast service. To be specific, the terminal may release or suspend the configuration and/or radio bearer of the inactive multicast service as configured by the network device.

In some embodiments of the present disclosure, the terminal triggers a Radio Resource Control (RRC) connection, and thereby the network device returns a configuration indication to the terminal based on the RRC connection, so as to indicate the terminal to release or suspend the configuration and/or radio bearer of the inactive multicast service.

In some embodiments of the present disclosure, in response to determining that the serving cell does not the inactive multicast service, the terminal triggers the RRC connection.

The triggering, by the terminal, the RRC connection includes triggering, by the terminal, a RRC connection recovery, or triggering, by the terminal, a RRC connection establishment, or triggering, by the terminal the other procedure, which will not be particularly defined herein.

In some embodiments of the present disclosure, the inactive multicast service includes a predetermined type of inactive multicast service.

The predetermined type of inactive multicast service refers to an inactive multicast service received by the terminal in the serving cell and meeting requirements.

Optionally, the predetermined type of inactive multicast service includes at least one of the followings.
(1) An inactive multicast service in which the terminal is interested

The inactive multicast service in which the terminal is interested refers to an inactive multicast service defined by the terminal itself. Alternatively, the inactive multicast service in which the terminal is interested may also be understood as an inactive multicast service which needs to be received by the terminal. For the inactive multicast service which does not need to be received by the terminal, the terminal does not need to receive it.

In some embodiments of the present disclosure, the terminal configures by itself the inactive multicast service of interest, i.e., the inactive multicast service in which the terminal is interested is configured by the terminal on its own initiative.

### (2) An inactive multicast service which is currently received by the terminal

The inactive multicast service currently received by the terminal refers to an inactive multicast service received by the terminal in the serving cell where the inactive multicast service is supported.

In some embodiments of the present disclosure, there exists such a circumstance where the terminal is switched to another serving cell, a serving cell before the switching is a first serving cell, and a serving cell after the switching is a second serving cell. Hence, the inactive multicast service currently received by the terminal is actually an inactive multicast service sent by the first serving cell, and the terminal determines that the second serving cell does not support the inactive multicast service.

### (3) An inactive multicast service, a configuration of which is configured for the terminal

The network device configures an inactive multicast service for the terminal, so the terminal may receive the inactive multicast service sent by the serving cell based on the inactive multicast service configured by the network device.

It should be appreciated that, in the embodiments of the present disclosure, the description is given in a case that the inactive multicast service includes any type of inactive multicast service. In another embodiment of the present disclosure, the terminal may determine whether or not the serving cell supports the inactive multicast service, and a determination mode of the terminal includes any of the followings.
(1) In a case that the terminal cannot receive the inactive multicast service, the terminal determines that the serving cell does not support the inactive multicast service.
   In the embodiments of the present disclosure, the terminal continuously receives the inactive multicast service sent by the serving cell. However, in a case that the terminal cannot receive the inactive multicast service sent by the serving cell, it means that at this time the serving cell does not send the inactive multicast service to the terminal. At this time, the terminal determines that the serving cell does not support the inactive multicast service.
(2) In a case that the serving cell is determined as not belonging to an action area of the inactive multicast service, the terminal determines that the serving cell does not support the inactive multicast service.
   The network device configures the action area of the inactive multicast service for the terminal, i.e., in a case that the terminal is located in the action area of the inactive multicast service, the terminal receives the inactive multicast service sent by the serving cell, and in a case that the terminal is not located in the action area of the inactive multicast service, it means that the terminal cannot receive the inactive multicast service sent by the serving cell. In addition, it may also be understood that, the terminal determines that a current serving cell does not belong to the action area of the inactive multicast service, so the serving cell does not support the inactive multicast service and cannot send the inactive multicast service to the terminal, and the terminal cannot receive the inactive multicast service sent by the serving cell.
(3) In a case that the inactive multicast service supported by the serving cell does not belong to an inactive multicast service configured by the network device, the terminal determines that the serving cell does not support the inactive multicast service.

In the embodiments of the present disclosure, in a case that the network device configures the inactive multicast service for the terminal and the terminal determines that the inactive multicast service supported by the serving cell is different from the inactive multicast service configured by the network device, it means that the terminal determines that the inactive multicast service supported by the serving cell does not belong to the inactive multicast service configured by the network device, and determines that the serving cell does not support the inactive multicast service.

For example, the inactive multicast services configured by the network device for the terminal include an inactive multicast service 1, an inactive multicast service 2 and an inactive multicast service 3, and the inactive multicast service determined by the terminal and supported by the serving cell is an inactive multicast service 4. The inactive multicast service supported by the serving cell does not belong to the inactive multicast services configured by the network device, so the terminal determines that the serving cell does not support the inactive multicast service.

FIG. 4 is yet another flow chart of the service processing method according to an exemplary embodiment of the present disclosure. As shown in FIG. 4, the service processing method includes the following steps.

Step 401: the network device sends a configuration information to the terminal.

Step 402: the terminal receives the configuration indication sent by the network device, and the configuration indication is used to indicate the terminal to release or suspend the configuration and/or radio bearer of the inactive multicast service.

Step 403: the terminal releases or suspends the configuration and/or radio bearer of the inactive multicast service in response to receiving the configuration indication.

In some embodiments of the present disclosure, the terminal triggers a RRC connection, and sends request information to the network device. The network device receives the request information, determines the configuration information based on the request information, and sends the configuration indication to the terminal. The terminal receives the configuration indication sent by the network device, and releases or suspends the configuration and/or radio bearer of the inactive multicast service in response to receiving the configuration indication.

Optionally, the request information is a RRC request which is used by the terminal to trigger a RRC connection establishment procedure or a RRC connection recovery procedure. For example, the RRC request is a RRC connection recovery request, a RRC connection establishment request or any other type of request, which will not be particularly defined herein.

Optionally, the terminal triggers the RRC connection and sends the request information to the network device, and thereby the network device configures various releasing modes.
(1) The terminal sends the RRC request to the network device, so as to trigger the RRC connection establishment procedure or the RRC connection recovery procedure via the RRC request. The network device receives the RRC request sent by the terminal, and sends a RRC request response to the terminal in response to the RRC request. The configuration indication included in the RRC request response is used to indicate the terminal to release the configuration and/or radio bearer of the inactive multicast service.

In some embodiments of the present disclosure, the RRC request response is any of a RRC release message, a RRC recovery message, a RRC establishment message or a RRC rejection message, or any other RRC message, which will not be particularly defined herein.

For example, the terminal sends the RRC connection recovery request to the network device, so as to trigger the RRC connection recovery procedure. The network device receives the RRC connection recovery request sent by the terminal, and sends the RRC request response to the terminal in response to the RRC connection recovery request. The configuration indication included in the RRC request response is used to indicate the terminal to release the configuration and/or radio bearer of the inactive multicast service.

For another example, the terminal sends the RRC connection establishment request to the network device, so as to trigger the RRC connection establishment procedure. The network device receives the RRC connection establishment request sent by the terminal, and sends the RRC request response to the terminal in response to the RRC connection establishment request. The configuration indication included in the RRC request response is used to indicate the terminal to release the configuration and/or radio bearer of the inactive multicast service.

The following description will be given in a case that the RRC request response is a RRC release message, and the RRC release message includes identification information for indicating the inactive multicast service. The configuration indication is issued through the identification information included in the RRC release message, so as to indicate the terminal to release the configuration and/or radio bearer of the inactive multicast service. The terminal receives the RRC release message, and releases the configuration and/or radio bearer of the inactive multicast service.

The identification information about the inactive multicast service includes a TMGI, a MBS Session ID, a MBS QoS flow ID or a configuration of the inactive multicast service, or any other type of identity, which will not be particularly defined herein.

It should be appreciated that, in the embodiments of the present disclosure, the description is given in a case that the RRC release message includes the identification information for indicating the inactive multicast service. In some other embodiments of the present disclosure, the RRC release message does not include the identification information for indicating the inactive multicast service, and after the terminal has received the RRC release message, the terminal releases the configuration and/or radio bearer of the inactive multicast service.

In the embodiments of the present disclosure, the description is given in a case that the RRC request response is the RRC release message. In some other embodiments of the present disclosure, the RRC request response may also be replaced with a RRC recovery message, a RRC establishment message or a RRC rejection message, which will not be particularly defined herein.

(2) The terminal sends the RRC request to the network device, so that the terminal triggers the RRC connection establishment procedure or the RRC connection recovery procedure. The network device receives the RRC request sent by the terminal, and configures the terminal to be in a connected state in response to the RRC request. After the terminal enters the connected state, the network device sends the RRC message to the terminal in response to the terminal entering the connected state, so as to indicate the terminal to release the configuration and/or radio bearer of the inactive multicast service.

In some embodiments of the present disclosure, the RRC message is any of a RRC release message or a RRC reconfiguration message, or any other RRC message, which will not be particularly defined herein.

In some embodiments of the present disclosure, the network device receives the RRC request sent by the terminal, and sends the RRC recovery message or the RRC establishment message to the terminal in response to the RRC request to configure the terminal to enter the connected state, or the network device also sends the other message to the terminal to configure the terminal to enter the connected state.

For example, the terminal sends the RRC connection recovery request to the network device, so that the terminal triggers the RRC connection recovery procedure. The network device receives the RRC connection recovery request sent by the terminal, and configures the terminal to enter the connected state in response to the RRC connection recovery request. After the terminal enters the connected state, the network device sends the RRC message to the terminal in response to the terminal entering the connected state, so as to indicate the terminal to release the configuration and/or radio bearer of the inactive multicast service.

For another example, the terminal sends the RRC connection establishment request to the network device, so that the terminal triggers the RRC connection establishment procedure. The network device receives the RRC connection establishment request sent by the terminal, and configures the terminal to enter the connected state in response to the RRC connection establishment request. After the terminal enters the connected state, the network device sends the RRC message to the terminal in response to the terminal entering the connected state, so as to indicate the terminal to release the configuration and/or radio bearer of the inactive multicast service.

The description will be given hereinafter in a case that the RRC message is the RRC release message, and the RRC release message includes identification information for indicating the inactive multicast service. The configuration indication is issued through the identification information included in the RRC release message, so as to indicate the terminal to release the configuration and/or radio bearer of the inactive multicast service. The terminal receives the RRC release message, and releases the configuration and/or radio bearer of the inactive multicast service.

The identification information about the inactive multicast service includes a TMGI, a MBS Session ID, a MBS QoS flow ID or a configuration of the inactive multicast service, or any other type of identity, which will not be particularly defined herein.

It should be appreciated that, in the embodiments of the present disclosure, the description is given in a case that the RRC release message includes the identification information for indicating the inactive multicast service. In some other embodiments of the present disclosure, the RRC release message does not include the identification information for indicating the inactive multicast service, and after the terminal has received the RRC release message, the terminal releases the configuration and/or radio bearer of the inactive multicast service.

In addition, the description will be given hereinafter in a case that the RRC message is a RRC reconfiguration message, and the RRC reconfiguration message includes the identification information for indicating the inactive multicast service. The configuration indication is issued through the identification information included in the RRC reconfiguration message, so as to indicate the terminal to release the configuration and/or radio bearer of the inactive multicast service. The terminal receives the RRC reconfiguration message, and releases the configuration and/or radio bearer of the inactive multicast service.

The identification information about the inactive multicast service includes a TMGI, a MBS Session ID, a MBS QoS flow ID or a configuration of the inactive multicast service, or any other type of identity, which will not be particularly defined herein.

It should be appreciated that, in the embodiments of the present disclosure, the description is given in a case that the RRC reconfiguration message includes the identification information for indicating the inactive multicast service. In some other embodiments of the present disclosure, the RRC reconfiguration message does not include the identification information for indicating the inactive multicast service, and after the terminal has received the RRC reconfiguration message, the terminal releases the configuration and/or radio bearer of the inactive multicast service.

Optionally, the terminal triggers the RRC connection and sends the request information to the network device, and thereby the network device configures various suspending modes.
(1) The terminal sends the RRC request to the network device, so as to trigger the RRC connection establishment procedure or the RRC connection recovery procedure via the RRC request. The network device receives the RRC request sent by the terminal, and sends a RRC request response to the terminal in response to the RRC request. The configuration indication included in the RRC request response is used to indicate the terminal to suspend the configuration and/or radio bearer of the inactive multicast service.

In some embodiments of the present disclosure, the RRC request response is any of a RRC release message, a RRC recovery message, a RRC establishment message or a RRC rejection message, or any other RRC message, which will not be particularly defined herein.

For example, the terminal sends the RRC connection recovery request to the network device, so as to trigger the RRC connection recovery procedure. The network device receives the RRC connection recovery request sent by the terminal, and sends the RRC request response to the terminal in response to the RRC connection recovery request. The configuration indication included in the RRC request response is used to indicate the terminal to suspend the configuration and/or radio bearer of the inactive multicast service.

For another example, the terminal sends the RRC connection establishment request to the network device, so as to trigger the RRC connection establishment procedure. The network device receives the RRC connection establishment request sent by the terminal, and sends the RRC request response to the terminal in response to the RRC connection establishment request. The configuration indication included in the RRC request response is used to indicate the terminal to suspend the configuration and/or radio bearer of the inactive multicast service.

The following description will be given in a case that the RRC request response is a RRC release message, and the RRC release message includes a suspending indication and identification information for indicating the inactive multicast service, so as to indicate the terminal to suspend the configuration and/or radio bearer of the inactive multicast service. Upon the receipt of the RRC release message, the terminal suspends the configuration and/or radio bearer of the inactive multicast service.

The identification information about the inactive multicast service includes a TMGI, a MBS Session ID, a MBS QoS flow ID or a configuration of the inactive multicast service, or any other type of identity, which will not be particularly defined herein.

It should be appreciated that, in the embodiments of the present disclosure, the description is given in a case that the RRC release message includes the identification information for indicating the inactive multicast service. In some other embodiments of the present disclosure, the RRC release message does not include the identification information for indicating the inactive multicast service but includes the suspending indication for indicating the terminal to suspend the configuration and/or radio bearer of the inactive multicast service. Upon the receipt of the RRC release message, the terminal suspends the configuration and/or radio bearer of the inactive multicast service.

In the embodiments of the present disclosure, the description is given in a case that the RRC request response is the RRC release message. In some other embodiments of the present disclosure, the RRC request response may also be replaced with a RRC recovery message, a RRC establishment message or a RRC rejection message.

(2) The terminal sends the RRC request to the network device, so that the terminal triggers the RRC connection establishment procedure or the RRC connection recovery procedure. The network device receives the RRC request sent by the terminal, and configures the terminal to be in the connected state in response to the RRC request. After the terminal enters the connected state, the network device sends the RRC message to the terminal in response to the terminal entering the connected state, so as to indicate the terminal to suspend the configuration and/or radio bearer of the inactive multicast service.

In some embodiments of the present disclosure, the RRC message is any of a RRC release message or a RRC reconfiguration message, or any other RRC message, which will not be particularly defined herein.

In some embodiments of the present disclosure, the network device receives the RRC request sent by the terminal, and sends the RRC recovery message or the RRC establishment message to the terminal in response to the RRC request to configure the terminal to enter the connected state, or the network device also sends the other message to the terminal to configure the terminal to enter the connected state.

For example, the terminal sends the RRC connection recovery request to the network device, so that the terminal triggers the RRC connection recovery procedure. The network device receives the RRC connection recovery request sent by the terminal, and configures the terminal to enter the connected state in response to the RRC connection recovery request. After the terminal enters the connected state, the network device sends the RRC message to the terminal in response to the terminal entering the connected state, so as to indicate the terminal to suspend the configuration and/or radio bearer of the inactive multicast service.

For another example, the terminal sends the RRC connection establishment request to the network device, so that the terminal triggers the RRC connection establishment procedure. The network device receives the RRC connection establishment request sent by the terminal, and configures the terminal to enter the connected state in response to the RRC connection establishment request. After the terminal enters the connected state, the network device sends the RRC message to the terminal in response to the terminal entering the connected state, so as to indicate the terminal to suspend the configuration and/or radio bearer of the inactive multicast service.

The following description will be given in a case that the RRC request response is a RRC release message, and the RRC release message includes a suspending indication and identification information for indicating the inactive multicast service, so as to indicate the terminal to suspend the configuration and/or radio bearer of the inactive multicast service. Upon the receipt of the RRC release message, the terminal suspends the configuration and/or radio bearer of the inactive multicast service.

The identification information about the inactive multicast service includes a TMGI, a MBS Session ID, a MBS QoS flow ID or a configuration of the inactive multicast service, or any other type of identity, which will not be particularly defined herein.

It should be appreciated that, in the embodiments of the present disclosure, the description is given in a case that the RRC release message includes the identification information for indicating the inactive multicast service. In some other embodiments of the present disclosure, the RRC release message does not include the identification information for indicating the inactive multicast service but includes the suspending indication for indicating the terminal to suspend the configuration and/or radio bearer of the inactive multicast service. Upon the receipt of the RRC release message, the terminal suspends the configuration and/or radio bearer of the inactive multicast service.

In the embodiments of the present disclosure, the description is given in a case that the RRC request response is the RRC release message. In some other embodiments of the present disclosure, the RRC request response may also be replaced with a RRC reconfiguration message, which will not be particularly defined herein.

In the scheme provided in the embodiments of the present disclosure, the terminal triggers the RRC connection to release or suspend the configuration and/or radio bearer of the inactive multicast service as configured by the network device. The present disclosure provides a scheme for processing, by the terminal, the inactive multicast service, so as to ensure the transmission reliability.

It should be appreciated that, in the embodiments of the present disclosure, the terminal may further stop monitoring a PDCCH corresponding to the inactive multicast service. In other words, after the terminal determines that the serving cell does not support the inactive multicast service, the terminal stops monitoring the PDCCH corresponding to the inactive multicast service, so as to stop receiving the inactive multicast service.

In the scheme provided by the embodiments of the present disclosure, the terminal determines that the serving cell does not support the inactive multicast service, and stops monitoring the PDCCH corresponding to the inactive multicast service. In this way, it is able to not only increase the accuracy of determining, by the terminal, that the serving cell does not support the inactive multicast service, but also reduce resources for the terminal and ensure the transmission reliability.

It should be appreciated that, the above embodiment may be divided into new embodiments, or combined with the other embodiment to form a new embodiment. The combination of the embodiments will not be particularly defined herein.

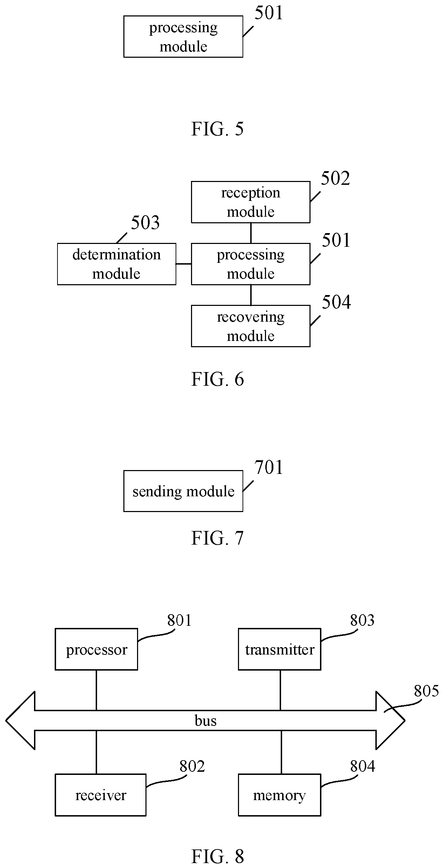

FIG. 5 is a block diagram of a service processing apparatus according to an exemplary embodiment of the present disclosure. As shown in FIG. 5, the apparatus includes a processing module 501.

The processing module 501 is configured to release or suspend a configuration and/or a radio bearer of an inactive multicast service in response to determining that a serving cell does not support the inactive multicast service.

In some embodiments of the present disclosure, the processing module 501 is further configured to directly release or suspend the configuration and/or the radio bearer of the inactive multicast service in response to determining that the serving cell does not support the inactive multicast service.

In some embodiments of the present disclosure, the processing module 501 is further configured to trigger a connection establishment procedure in response to determining that the serving cell does not support the inactive multicast service.

In some embodiments of the present disclosure, as shown in FIG. 6, the apparatus further includes a reception module 502 configured to receive a configuration indication sent by a network device, and the configuration indication is used to indicate the terminal to release or suspend the configuration and/or the radio bearer of the inactive multicast service. The processing module 501 is further configured to release or suspend the configuration and/or the radio bearer of the inactive multicast service in response to receiving the configuration indication.

In some embodiments of the present disclosure, the inactive multicast service includes a predetermined type of inactive multicast service.

In some embodiments of the present disclosure, as shown in FIG. 6, the apparatus further includes a determination module 503. The determination module 503 is configured to: in a case that the inactive multicast service cannot be received, determine that the serving cell does not support the inactive multicast service; or in a case that the serving cell is determined as not belonging to an action area of the inactive multicast service, determine that the serving cell does not support the inactive multicast service; or in a case that the inactive multicast service supported by the serving cell does not belong to an inactive multicast service configured by the network device, determine that the serving cell does not support the inactive multicast service.

In some embodiments of the present disclosure, as shown in FIG. 6, the apparatus further includes a recovery module 504 configured to recover the configuration and/or the radio bearer of the inactive multicast service in response to determining that the serving cell supports the inactive multicast service.

It should be appreciated that, in a case of achieving functions, the apparatus provided in the embodiments of the present disclosure has illustratively described merely on the basis of the division of various functional modules. In actual use, the above functions may be completed through different functional modules according to the practical need, i.e., an internal structure of a device is divided into different functional modules to achieve all of, or a part of, the above-mentioned functions. In addition, the apparatus provided in the embodiments of the present disclosure belongs to a same concept as the above method embodiments, and a specific implementation procedure may refer to that mentioned in the method embodiments, which will not be particularly defined herein.

FIG. 7 is a block diagram of an indication sending apparatus according to an exemplary embodiment of the present disclosure. As shown in FIG. 7, the apparatus includes a sending module 701.

The sending module 701 is configured to send a configuration indication to a terminal, and the configuration indication is used to indicate the terminal to release or suspend a configuration and/or a radio bearer of an inactive multicast service.

In some embodiments of the present disclosure, the inactive multicast service includes a predetermined type of inactive multicast service.

It should be appreciated that, in a case of achieving functions, the apparatus provided in the embodiments of the present disclosure has illustratively described merely on the basis of the division of various functional modules. In actual use, the above functions may be completed through different functional modules according to the practical need, i.e., an internal structure of a device is divided into different functional modules to achieve all of, or a part of, the above-mentioned functions. In addition, the apparatus provided in the embodiments of the present disclosure belongs to a same concept as the above method embodiments, and a specific implementation procedure may refer to that mentioned in the method embodiments, which will not be particularly defined herein.

FIG. 8 is a schematic view of a communication device according to an exemplary embodiment of the present disclosure. The communication device includes a processor 801, a receiver 802, a transmitter 803, a memory 804 and a bus 805.

The processor 801 includes one or more processing cores, and the processor 801 executes various function applications and information processing through running a software program and a module.

The receiver 802 and the transmitter 803 may be implemented as a communication assembly, and the communication assembly may be a communication chip.

The memory 804 is coupled to the processor 801 via the bus 805.

The memory 804 stores therein at least one program code, and the processor 801 is used to execute the at least one program code to implement the steps in the above method embodiments.

In addition, the communication device may be a terminal or a network device. The memory 1004 is implemented through any types of volatile or nonvolatile storage devices or a combination thereof. The volatile or nonvolatile storage device includes, but not limited to, a magnetic disk or an optical disk, an Electrically Erasable Programmable Read Only Memory (EEPROM), an Erasable Programmable Read Only Memory (EPROM), a Static Random-Access Memory (SRAM), a Read Only Memory (ROM), a magnetic memory, a flash memory, or a Programmable Read Only Memory (PROM).

The present disclosure further provides an exemplary embodiment a computer-readable storage medium storing therein an executable program code. The executable program code is loaded and executed by a processor so as to implement the service processing method or indication sending method executed by a communication device and provided in the above-mentioned embodiments.

The present disclosure further provides in an exemplary embodiment a chip including a programmable logic circuit and/or a program instruction. The chip operates on a terminal or a network device to implement the service processing method or indication sending method provided in the above-mentioned embodiments.

The present disclosure provides in an exemplary embodiment a computer program product. The computer program product is executed by a processor of a terminal or a network device, so as to implement the service processing method or indication sending method provided in the above-mentioned embodiments.

It should be appreciated that, all of, or a part of, the steps in the above-mentioned embodiments of the present disclosure may be implemented through hardware, or through hardware under the control of a program. The program may be stored in a computer-readable storage medium, and the storage medium may be a ROM, a magnetic disk or an optical disk.

The above are merely optional embodiments of the present disclosure, but shall not be construed as limiting the present disclosure. Any modification, equivalents or improvements made without departing from the spirit and principle of the present disclosure shall fall within the scope of the present disclosure.

## Claims

1. A service processing method, performed by a terminal, comprising:
releasing or suspending a configuration and/or a radio bearer of an inactive multicast service, in response to determining that a serving cell does not support the inactive multicast service.

2. The service processing method of claim 1, wherein releasing or suspending the configuration and/or the radio bearer of the inactive multicast service in response to determining that the serving cell does not support the inactive multicast service comprises:
directly releasing or suspending the configuration and/or the radio bearer of the inactive multicast service in response to determining that the serving cell does not support the inactive multicast service.

3. The service processing method of claim 1, wherein in response to determining that the serving cell does not support the inactive-multicast service comprises:
triggering a Radio Resource Control (RRC) connection establishment procedure in response to determining that the serving cell does not support the inactive multicast service.

4. The service processing method of claim 3, further comprising:
receiving a configuration indication sent by a network device, wherein the configuration indication is configured to indicate the terminal to release or suspend the configuration and/or the radio bearer of the inactive multicast service,
wherein releasing or suspending the configuration and/or the radio bearer of the inactive multicast service comprises:
releasing or suspending the configuration and/or the radio bearer of the inactive multicast service in response to receiving the configuration indication.

5. The service processing method of any one of claims 1 to 4, wherein the inactive multicast service comprises a predetermined type of inactive multicast service.

6. The service processing method of any one of claims 1 to 5, further comprising:
in a case that the inactive multicast service cannot be received, determining that the serving cell does not support the inactive multicast service; or
in a case that the serving cell does not belong to an action area of the inactive multicast service, determining that the serving cell does not support the inactive multicast service; or
in a case that the inactive multicast service supported by the serving cell does not belong to an inactive multicast service configured by a network device, determining that the serving cell does not support the inactive multicast service.

7. The service processing method of any one of claims 1 to 6, wherein subsequent to releasing or suspending the configuration and/or the radio bearer of the inactive multicast service, the service processing method further comprises:
recovering the configuration and/or the radio bearer of the inactive multicast service, in response to determining that the serving cell supports the inactive multicast service.

8. An indication sending method, performed by a network device, comprising:
sending a configuration indication to a terminal, wherein the configuration indication is configured to indicate the terminal to release or suspend a configuration and/or a radio bearer of an inactive multicast service.

9. The indication sending method of claim 8, wherein the inactive multicast service comprises a predetermined type of inactive multicast service.

10. A service processing apparatus, comprising:
a processing module configured to release or suspend a configuration and/or a radio bearer of an inactive-multicast service in response to determining that a serving cell does not support the inactive-multicast service.

11. An indication sending apparatus, comprising:
a sending module configured to send a configuration indication to a terminal, wherein the configuration indication is used to indicate the terminal to release or suspend a configuration and/or a radio bearer of an inactive-multicast service.

12. A terminal, comprising:
a processor; and
a transceiver coupled to the processor,
wherein the processor is configured to load and execute an executable instruction to implement the service processing method of any one of claims 1 to 7.

13. A network device, comprising:
a processor; and
a transceiver coupled to the processor,
wherein the processor is configured to load and execute an executable instruction to implement the indication sending method of claim 8 or 9.

14. A computer-readable storage medium storing therein an executable program code, wherein the executable program code is loaded and executed by a processor to implement the service processing method of any one of claims 1 to 7, or implement the indication sending method of claim 8 or 9.
